# EUROPEAN PATENT SPECIFICATION

(11) **EP 4 170 517 B1**
(45) Date of publication and mention of the grant of the patent: **07.08.2024**
(21) Application number: 22202348.3
(22) Date of filing: 19.10.2022
(51) Int. Cl.: G06F 16/25

(54) **INTEGRATING DATA WITH DIFFERENT CONFIGURATION MODELS**
INTEGRATION VON DATEN MIT VERSCHIEDENEN KONFIGURATIONSMODELLEN
INTÉGRATION DE DONNÉES AVEC DIFFÉRENTS MODÈLES DE CONFIGURATION

(30) Priority: 20.10.2021 US 202117506224
(43) Date of publication of application: 26.04.2023
(73) Proprietor: SAP SE, 69190 Walldorf (DE)
(72) Inventor: MOSER, Martin, 69190 Walldorf (DE)
(74) Representative: Müller-Boré & Partner Patentanwälte PartG mbB

(56) References cited:
- ANONYMOUS: "Amazon QuickSight User Guide - first 400 pages", 31 August 2017 (2017-08-31), XP093002648, Retrieved from the Internet <URL:https://manualzz.com/doc/28122261/amazon-quicksight---user-guide---aws-documentation> [retrieved on 20221128]
- ANONYMOUS: "Join (SQL) - Wikipedia", 16 August 2021 (2021-08-16), XP093022873, Retrieved from the Internet <URL:https://en.wikipedia.org/w/index.php?title=Join_(SQL)&oldid=1039009095> [retrieved on 20230210]
- ANONYMOUS: "SQL Refactoring techniques - How to split a table in SQL", 10 March 2014 (2014-03-10), XP093022888, Retrieved from the Internet <URL:https://solutioncenter.apexsql.com/how-to-split-a-table-in-sql/> [retrieved on 20230210]

## Description

### TECHNICAL FIELD

The subject matter disclosed herein generally relates to data processing systems in which data objects are associated with configuration data. Specifically, the present disclosure addresses systems and methods to integrate data objects using different configuration models into a unified model.

### BACKGROUND

Different systems use different configuration models. Data cannot be transferred between the different systems due to configuration incompatibility.
Further, Anonymous: "Amazon QuickSight User Guide - first 400 pages", 31 August 2017 (2017-08-31), Retrieved from the Internet: URL: https://manualzz.com/doc/28122261/amazon-quicksight---user-guide---aws-documentation discusses at page 115 joining two or more tables from the same data source.
Aspects of the claimed invention are defined in the independent claims. Preferred embodiments are defined in the dependent claims.

### BRIEF DESCRIPTION OF THE DRAWINGS

FIG. 1 is a network diagram illustrating an example network environment suitable for integrating data with different configuration models.
FIG. 2 is a block diagram of an example application server, suitable for integrating data with different configuration models.
FIG. 3 is a block diagram of an example database schema, suitable for use in integrating data with different configuration models.
FIG. 4 is a block diagram of an example user interface for searching for data objects and presenting search results.
FIG. 5 is a flowchart illustrating operations of an example method suitable for integrating data with different configuration models.
FIG. 6 is a flowchart illustrating operations of an example method suitable for integrating data with different configuration models.
FIG. 7 is a block diagram showing one example of a software architecture for a computing device.
FIG. 8 is a block diagram of a machine in the example form of a computer system within which instructions may be executed for causing the machine to perform any one or more of the methodologies discussed herein.

### DETAILED DESCRIPTION

Example methods and systems are directed to integrating data with different configuration models. In enterprise scenarios, different application servers may use different configuration models to store configuration data for data objects. The data objects cannot be used without transformation in the different application servers. Discussed herein are systems and methods for automatically converting configuration data from one format to another, allowing data objects to be used by multiple application servers even though those application servers use different configuration models.

As used herein, a configuration model is a model for storing configuration data for data objects. In an embedded configuration model, configuration data is embedded in the data object to which the configuration data applies. Thus, in this embedded configuration model, each data object is self-contained and does not require reference to other data to determine the configuration data for the data object. However, the configuration data for each data object is stored separately, even if many data objects use the same configuration data.

In a referential configuration model, each data object includes an identifier for the corresponding configuration data. Accessing the configuration data for the data object is achieved by using the identifier to look up the configuration data from another location (e.g., in a database). In the referential configuration model, when multiple data objects use the same configuration data, the data objects use the same configuration data identifier, but the configuration data itself does not need to be replicated for each data object.

Hybrid configuration models may also be used, in which a first portion of configuration data is embedded in each data object and a second portion of configuration data is accessed based on an identifier stored in the data object. Two systems that both use hybrid configuration models may nonetheless use different configuration models. For example, a particular piece of configuration data may be embedded in one configuration model and accessed via a reference in another configuration model.

To support transferring a data object between applications using different configuration models, the configuration model for the data object is changed to match the configuration model expected by the application receiving the data object. For example, when transferring a data object from an application server using a referential configuration model to an application server using an embedded configuration model, the configuration data may be accessed and embedded in the data object. As another example, when transferring a data object from an application server using an embedded configuration model to an application server using a referential configuration model, an identifier of the configuration data is determined and added to the data object. The configuration data (other than the identifier) may be removed from the data object.

By use of the systems and methods described herein, the functionality of application servers using configuration models is improved. Specifically, each application server is enabled to access not only data objects of the configuration model used by the application server, but also data objects using other configuration models.

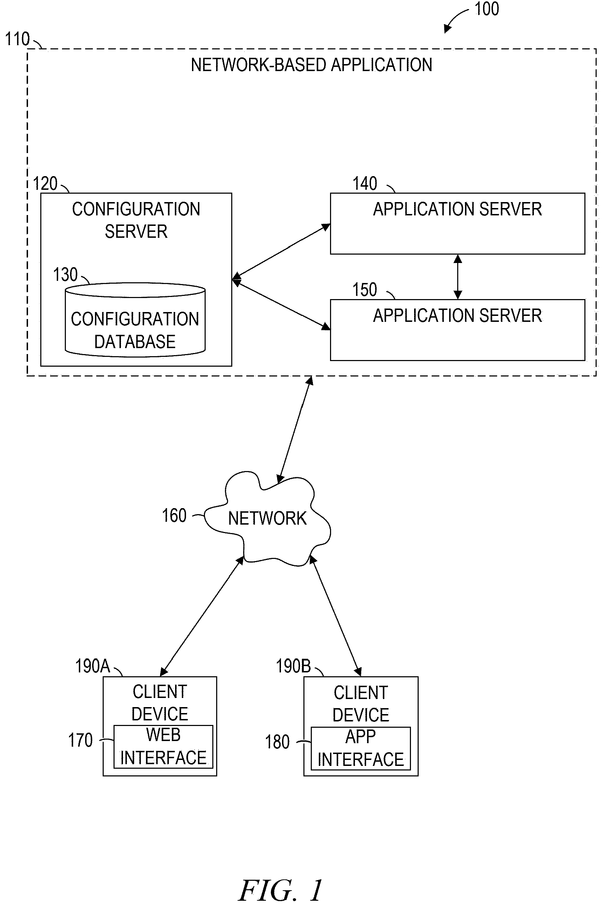

FIG. 1 is a network diagram illustrating an example network environment 100 suitable for integrating data with different configuration models. The network environment 100 includes a network-based application 110, client devices 190A and 190B, and a network 160. The network-based application 110 is provided by a first application server 140 and a second application server 150 in communication with a configuration server 120 comprising a configuration database 130. The application servers 140-150 access application data to provide one or more applications to the client devices 190A and 190B via a web interface 170 or an application interface 180.

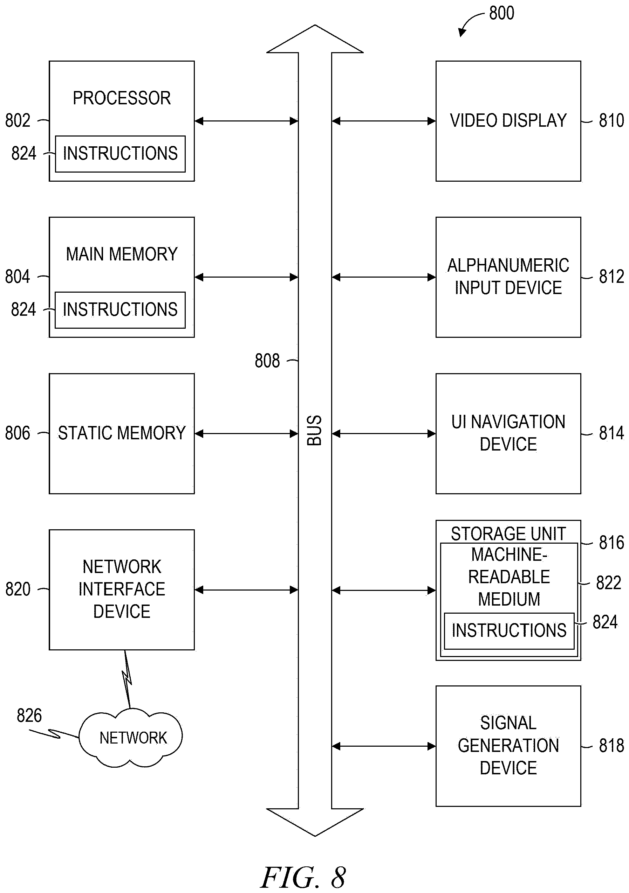

The application servers 130-140, the configuration server 120, and the client devices 190A and 190B may each be implemented in a computer system, in whole or in part, as described below with respect to FIG. 8. The client devices 190A and 190B may be referred to collectively as client devices 190 or generically as a client device 190.

The first application server 140 and the second application server 150 use different configuration models. Applications running on the first application server 140 are configured to process data objects with configuration data included in each data object. Applications running on the second application server 150 are configured to process data objects that each include an identifier for the configuration data for the data object. The identifier is used to access the configuration data from the configuration server 120.

To enable the first application server 140 and the second application server 150 to share data objects, data objects are converted from one configuration model to another. Each of the application servers 140-150 includes a conversion component. The conversion component determines if a data object complies with the configuration model used by the application server and, if it does not, converts the configuration of the data object to comply with the configuration model used by the application server. Thus, both application servers 140-150 are enabled to use data objects complying with different configuration models without modification of the applications using the data objects, integrating the data of the application servers 140.

Any of the machines, databases, or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 8. As used herein, a "database" is a data storage resource and may store data structured as a text file, a table, a spreadsheet, a relational database (e.g., an object-relational database), a triple store, a hierarchical data store, a document-oriented NoSQL database, a file store, or any suitable combination thereof. The database may be an in-memory database. Moreover, any two or more of the machines, databases, or devices illustrated in FIG. 1 may be combined into a single machine, database, or device, and the functions described herein for any single machine, database, or device may be subdivided among multiple machines, databases, or devices.

The application servers 140-150, the configuration server 120, and the client devices 190A-190B are connected by the network 160. The network 160 may be any network that enables communication between or among machines, databases, and devices. Accordingly, the network 160 may be a wired network, a wireless network (e.g., a mobile or cellular network), or any suitable combination thereof. The network 160 may include one or more portions that constitute a private network, a public network (e.g., the Internet), or any suitable combination thereof.

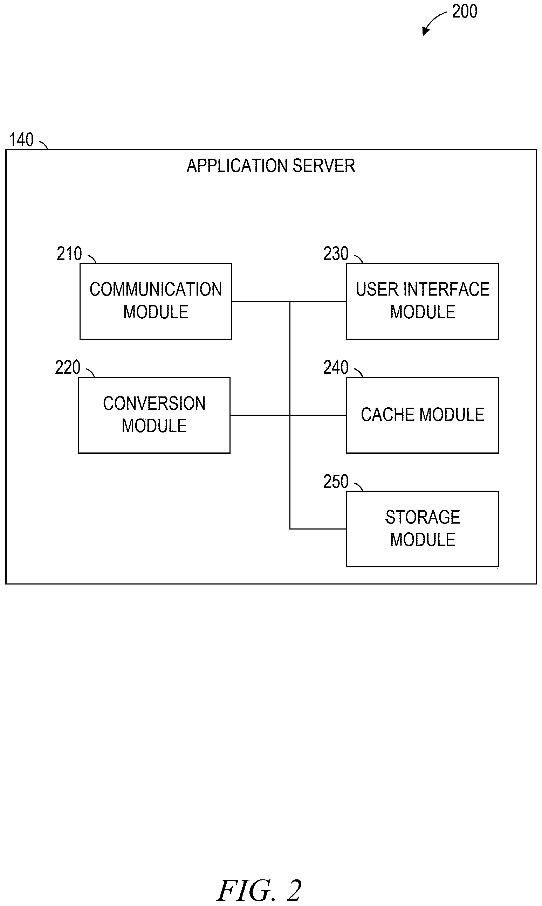

FIG. 2 is a block diagram 200 of an example application server 140, suitable for integrating data with different configuration models. The application server 140 is shown as including a communication module 210, a conversion module 220, a user interface module 230, a cache module 240, and a storage module 250, all configured to communicate with each other (e.g., via a bus, shared memory, or a switch). Any one or more of the modules described herein may be implemented using hardware (e.g., a processor of a machine). For example, any module described herein may be implemented by a processor configured to perform the operations described herein for that module. Moreover, any two or more of these modules may be combined into a single module, and the functions described herein for a single module may be subdivided among multiple modules. Furthermore, modules described herein as being implemented within a single machine, database, or device may be distributed across multiple machines, databases, or devices.

The communication module 210 receives data sent to the application server 140 and transmits data from the application server 140. For example, the communication module 210 may receive, from the client device 190A or 190B, a request to process a set of data objects. The request may comprise search criteria to identify the data objects to be processed. The search criteria may comprise keywords, a date range, a business unit, data objects, references to data objects, or any suitable combination thereof. The responsive data objects may be processed by the application. Some of the responsive data objects may use a configuration model of the application server 140 and some of the responsive data objects may use a different configuration model. Communications sent and received by the communication module 210 may be intermediated by the network 160.

The conversion module 220 converts data objects that do not use the configuration model of the application server 140 to use the configuration model of the application server 140, thus integrating data with different configuration models for use by the application server 140. For example, configuration data referenced by an identifier in a data object is retrieved from the configuration server 120 and added to the data object. As another example, configuration data referenced by an identifier in a data object may be retrieved from a database (e.g., the configuration database 130) via a network (e.g., the network 160).

Configuration data may be cached on the application server 140 using the cache module 240. The cache module 240 assures that the configuration values for the most frequently used configuration objects (COs) are kept in the in-memory cache to avoid a round-trip over the network 160 to the configuration server 120. This can be achieved, for example, by employing a least-recently-used scheme on the tuple (CO, version). For COs with many keys, a more fine-grained scheme may be advisable, e.g. (CO, version, key set) to reduce the memory requirements.

The application server 140 may determine whether a data object being received uses the configuration model of the application server 140. If the data object uses the configuration model of the application server 140, the conversion module 220 is bypassed and the data object is processed without conversion. If the data object uses a different configuration model, the conversion module 220 is used to convert the data object to use the configuration model of the application server 140.

A user interface for the application server 140 is provided using the user interface module 230. For example, a hypertext markup language (HTML) document may be generated by the user interface module 230, transmitted to a client device 190 by the communication module 210, and rendered on a display device of the client device 190 by a web browser executing on the client device 190. The user interface may comprise text fields, drop-down menus, and other inputs fields. The user interface may allow the user to identify one or more data objects to be operated on, identify one or more operations to perform on the identified data objects, or any suitable combination thereof. In response to the identification of the data objects and operations, the application server 140 performs the operations on the data objects. The performing of the operations on the data objects may change one or more of the data objects, create one or more new data objects, or any suitable combination thereof. The configuration models of one or more of the data objects may be converted for use by the application server 140 before the operations are performed.

Data objects, applications, or any suitable combination thereof may be stored and accessed by the storage module 250. For example, local storage of the application server 140, such as a hard drive, may be used. As another example, network storage may be accessed by the storage module 250 via the network 160.

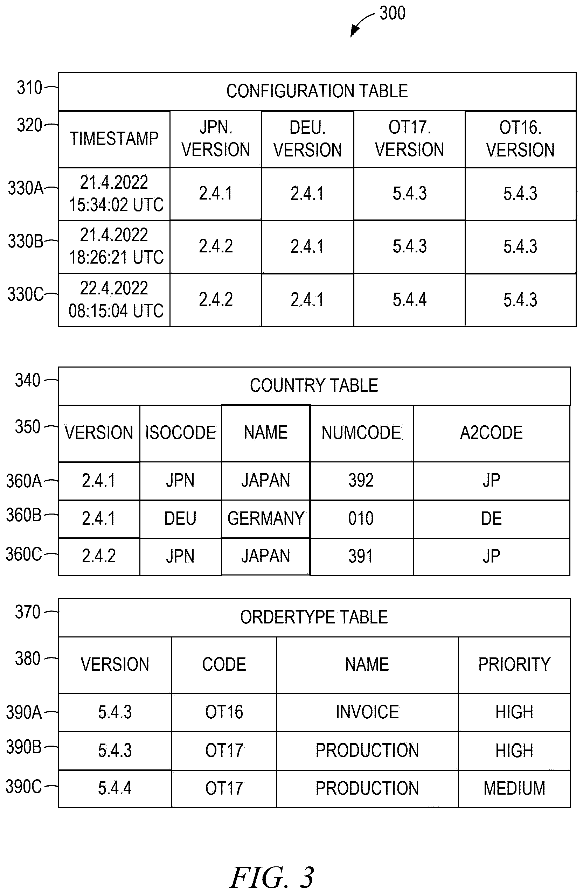

FIG. 3 is a block diagram of an example database schema 300, suitable for use in integrating data with different configuration models. The database schema 300 includes a configuration table 310, a country table 340, and an order type table 370. The configuration table 310 includes rows 330A, 330B, and 330C of a format 320. The country table 340 includes rows 360A, 360B, and 360C of a format 350. The order type table 370 includes rows 390A, 390B, and 390C of a format 380.

Each of the rows 330A-330C of the configuration table 310 includes a timestamp, a JPN.Version, a DEU.Version, an OT17.Version, and an OT16.Version. The configuration table 310 may be used to identify the configuration data in effect at a certain time. The timestamp of each of the rows 330A-330C indicates the time at which the configuration data of the row became active. The configuration data of the active row remains in effect until the configuration data of another row becomes active. Thus, in the example of FIG. 3, the configuration data of the row 330A was active from 15:34:02 UTC on April 21, 2022 until the configuration data of the row 330B went into effect at 18:26:21 UTC on the same day. The configuration data of the row 330B was active until the configuration data of the row 330C went into effect at 08:15:04 UTC on April 22, 2022.

The country table 340 contains, in each of the rows 360A-360C, a version of configuration data for a country. As shown by the format 350, each of the rows 360A-360C includes a version, an ISOCode, a name, a numerical code, and an A2Code (also referred as an "alpha-2" code, a two-character country identifier). Together, the ISOCode and version operate as a primary key for the country table 340, such that no two rows have the same values for both columns. Thus, using an ISOCode/version pair, any row in the country table 340 may be uniquely identified and any other configuration data for ISOCode/version may be looked up. In the example of FIG. 3, the rows 360A and 360C both store configuration data for ISOCode JPN, but the row 360A stores configuration data for version 2.4.1 and the row 360C stores configuration data for version 2.4.2. As can be seen in FIG. 3, the numeric code changed between the versions.

Each of the rows 390A-390C of the order type table 370 stores a version, a code, a name, and a priority, as shown by the format 380. The code and version, together, operate as a primary key for the order type table 370. Thus, using a code/version pair, any row in the order type table 370 may be uniquely identified and any other configuration data for the code/version may be looked up. In the example of FIG. 3, the rows 390B and 390C both store configuration data for code OT17, but the row 390B stores configuration data for version 5.4.3 and the row 390C stores configuration data for version 5.4.4. As can be seen in FIG. 3, the priority changed between the versions.

The row 330A of the configuration table 310 indicates that the JPN. Version was 2.4.1 and the DEU.Version was also 2.4.1 for data objects created while the configuration data of the row 330A was active. By setting the ISOCode to JPN and using the JPN.Version as the Country. Version, the row 360A of the country table 340 is identified as containing the active configuration data for Japan. Accordingly, the name, "Japan," the numeric code "392," and the A2Code "JP" are indirectly included in the configuration data of the row 330A. As a result, data objects indicating that they were created during the period of time that the configuration data of the row 330A was active and that use JPN configuration data make use of the configuration data of the row 330A. Data objects created during the same period of time but indicating that they use DEU configuration data would instead make use of the configuration data of the row 360B. Similarly, the row 330A indicates that the OT17. Version was 5.4.3, identifying the row 390B of the order type table 370 for data objects using Order Type. Code OT17.

The rows 330B and 330C of the configuration table 310 show incremental changes, first to the JPN. Version and then to the OT17. Version. Thus, depending on the timestamp at which various data objects were created, different configuration data from the country table 340 and the order type table 370 will be used for the data object.

For the purposes of example, only a few rows and columns are shown in each table of the database schema 300. Additional columns in one or more of the tables may serve to identify one or more of the authors, owners, creation date, or modification date associated with the data objects, the configuration data, or any suitable combination thereof. Additional tables may also be used, such as additional data or configuration tables. Alternatively, one or more tables of the database schema 300 may be combined.

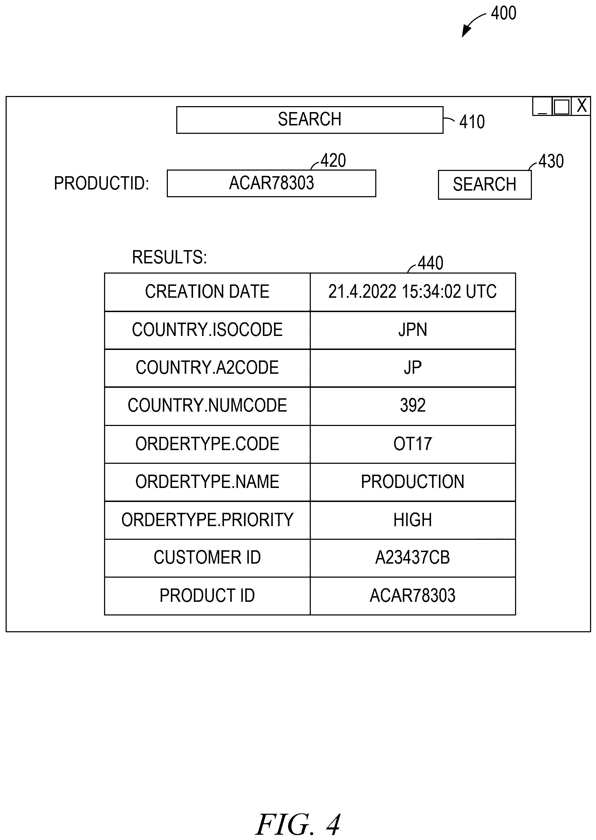

FIG. 4 is a block diagram of an example user interface 400 for searching for data objects and presenting search results. The user interface 400 includes a title 410, an input field 420, a button 430, and search results 440. The user interface 400 may be displayed on a display device of the client device 190A or 190B in response to a request from a user of the client device 190A or 190B. For example, a user may press a button on a user interface that causes the user interface 400 to be presented (e.g., by causing the application server 140 to generate an HTML document and provide it to the client device 190A for rendering the user interface 400 on a display device of the client device 190A).

The title 410 indicates that the user interface 400 is for a search. The user interacts with the input field 720 to provide the criteria for the search. For example, the input field 720 may be implemented as a drop-down selector that allows the user to select a product identifier from a set of preselected product identifiers. Other input fields may also be presented to receive selections of different search criteria (e.g., to allow search for data objects by date of creation, by country name or code, by order type name or code, or any suitable combination thereof). After providing the search criteria, the user may press the button 430 to submit the search criteria to the application server 140 via the network 160.

In response to receiving the search criteria, the application server 140 accesses data from the application server 140, the application server 150, or both and identifies zero or more search results. The application server 140 selects zero or more of the identified search results and provides them to the client device 190A for display in the user interface 400. In the example of FIG. 4, one search result 440 is provided and displayed. Thus, in the example of FIG. 4, the search request comprises a product identifier, and the providing of the result is based on the product identifiers of the data objects and the product identifier of the search request.

Information about the search result 440 is displayed. In the example of FIG. 4, the displayed information includes the creation date, the Country.ISOCode, the Country.A2Code, the Country.NumCode, the Order Type. Code, the OrderType.Name, the OrderType.Priority, the customer identifier, and the product identifier. As can be seen in FIG. 4, at least a portion of the displayed information is configuration data, which may be stored using different configuration models in the application server 140 and the application server 150. More or fewer pieces of information may be displayed. For example, a last modified date, a creator name, a cost, or any suitable combination thereof may be included.

Multiple data objects may be displayed, each created using a different configuration model. Data objects using a configuration model different than that used by the application server 140 may be converted for processing by the application server 140 and display in the user interface 400.

By use of the user interface 400, a user is enabled to search data created by multiple application servers to identify data objects that match the user's search criteria. By accessing existing data objects using a centralized interface, the user is saved the effort of searching each application server individually.

The user interface 400, by way of example and not limitation, provides a search application for data objects that operates on data objects with different configuration models. The systems and methods provided herein for integrating data with different configuration models may be used with any application that operates on data objects. For example, order processing, invoice processing, web applications, database applications, word processing applications, two-dimensional and three-dimensional image processing applications, or any suitable combination thereof may benefit from the configuration model integration methods and systems discussed herein.

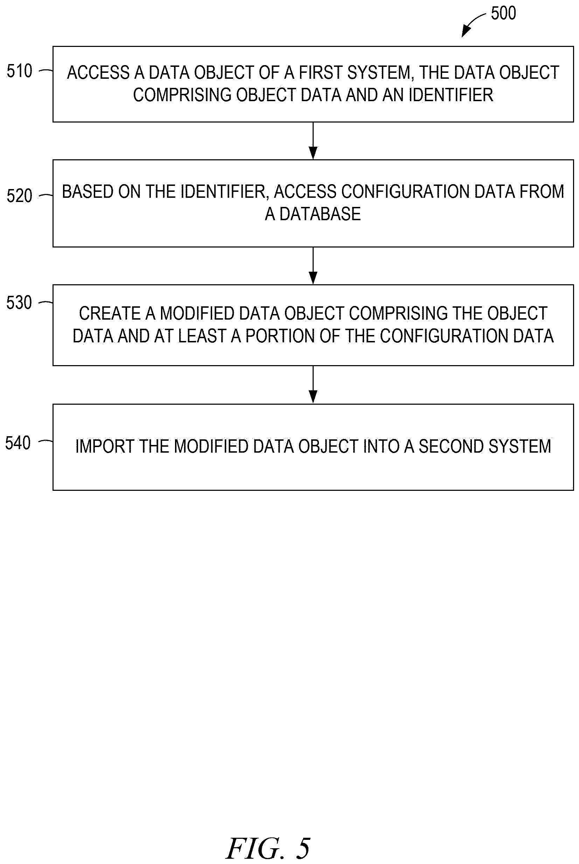

FIG. 5 is a flowchart illustrating operations of an example method 500 suitable for integrating data with different configuration models. The method 500 includes operations 510, 520, 530, and 540. By way of example and not limitation, the method 500 may be performed by the application servers 140-150 and the configuration server 120 of FIG. 1, using the modules, databases, images, and user interfaces shown in FIGS. 2-4.

In operation 510, the conversion module 220 accesses a data object of a first system, with the data object comprising object data and an identifier. The identifier may include a timestamp, a version number, a type of the object data, or any suitable combination thereof. The timestamp may indicate the date and time at which the data object was created.

The conversion module 220, in operation 520, accesses configuration data from a database based on the identifier. The identifier (e.g., a timestamp) may be used to identify a row in the configuration table 310. Alternatively, the identifier (e.g., a Country.ISOCode, a Country. Version, or both) may be used to identify a row in the country table 340. As still another alternative, the identifier (e.g., an Order Type. Code, an Order Type. Version, or both) may be used to identify a row in the order type table 370. The identified (and accessed) row includes configuration data.

In operation 530, the conversion module 220 creates a modified data object comprising the object data and at least a portion of the configuration data. For example, the configuration data accessed based on the identifier may be added to the object data to create the modified data object. The conversion module 220 imports the modified data object into a second system (operation 540).

The data object may further comprise one or more identifiers of portions of configuration data applicable to the data object. For example, the data object may indicate a Country.ISOCode of JPN and an OrderType.Code of OT17. Each row of the configuration table 310 indicates a version number for Country.ISOCodes JPN and DEU and a version number for Order Type. Codes OT17 and OT16. Nonetheless, since the data object does not identify DEU and OT16, only the configuration data for Country.ISOCode JPN and Order Type. Code OT17 is applicable to the data object. Accordingly, the modified data object comprises the identified portions of the configuration data and excludes unidentified portions of the configuration data.

By way of example, the method 500 is described as performing operations 510-540 to import a single data object from a first system to a second system. However, the operations may be repeated for any number of data objects and systems, allowing any number of application servers to access any number of data objects originating from any number of systems.

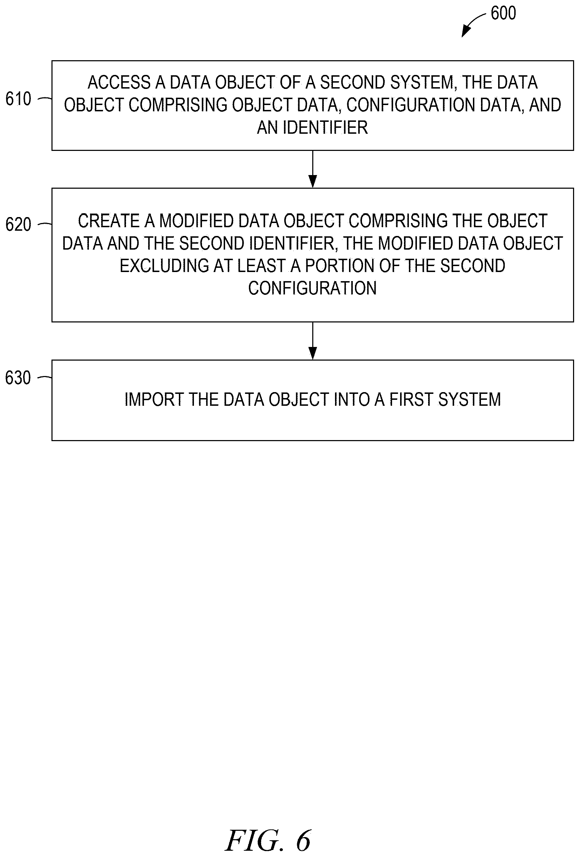

FIG. 6 is a flowchart illustrating operations of an example method 600 suitable for integrating data with different configuration models. The method 600 includes operations 610, 620, and 630. By way of example and not limitation, the method 600 may be performed by the application servers 140-150 and the configuration server 120 of FIG. 1, using the modules, databases, images, and user interfaces shown in FIGS. 2-4.

In operation 610, the conversion module 220 accesses a data object of a second system, the data object comprising object data, configuration data, and an identifier. The identifier may include a timestamp, a version number, a type of the object data, or any suitable combination thereof.

The conversion module 220, in operation 620, creates a modified data object comprising the object data and the second identifier, with the modified data object excluding at least a portion of the configuration data. For example, a portion of the configuration data accessible from a database based on the identifier may be removed from the object data to create the modified data object. The conversion module 220 imports the modified data object into a second system (operation 630).

By way of example, the method 600 is described as performing operations 610-630 to import a single data object from a second system to a first system. However, the operations may be repeated for any number of data objects and systems, allowing any number of application servers to access any number of data objects originating from any number of systems. Each of a plurality of application servers uses one of the methods 600 or 700 to import data objects from other applications servers using different configuration models, allowing all of the plurality of application servers to use the data objects created by all of the plurality of application servers even though various ones of the plurality of application servers use different configuration models.

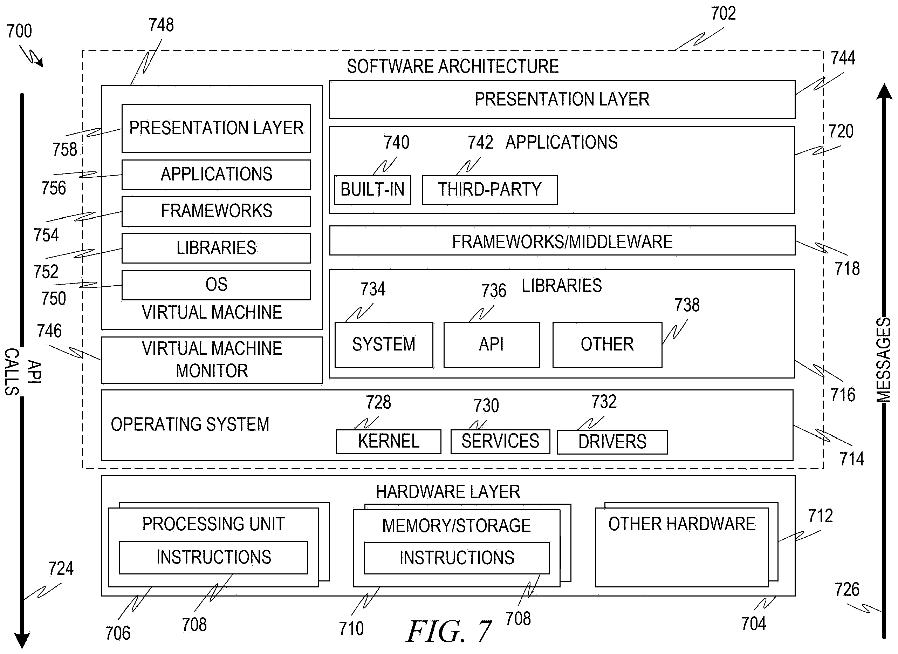

FIG. 7 is a block diagram 700 showing one example of a software architecture 702 for a computing device. The architecture 702 may be used in conjunction with various hardware architectures, for example, as described herein. FIG. 7 is merely a non-limiting example of a software architecture and many other architectures may be implemented to facilitate the functionality described herein. A representative hardware layer 704 is illustrated and can represent, for example, any of the above referenced computing devices. In some examples, the hardware layer 704 may be implemented according to the architecture of the computer system of FIG. 7.

The representative hardware layer 704 comprises one or more processing units 706 having associated executable instructions 708. Executable instructions 708 represent the executable instructions of the software architecture 702, including implementation of the methods, modules, subsystems, and components, and so forth described herein and may also include memory and/or storage modules 710, which also have executable instructions 708. Hardware layer 704 may also comprise other hardware as indicated by other hardware 712 which represents any other hardware of the hardware layer 704, such as the other hardware illustrated as part of the software architecture 702.

In the example architecture of FIG. 7, the software architecture 702 may be conceptualized as a stack of layers where each layer provides particular functionality. For example, the software architecture 702 may include layers such as an operating system 714, libraries 716, frameworks/middleware 718, applications 720, and presentation layer 744. Operationally, the applications 720 and/or other components within the layers may invoke application programming interface (API) calls 724 through the software stack and access a response, returned values, and so forth illustrated as messages 726 in response to the API calls 724. The layers illustrated are representative in nature and not all software architectures have all layers. For example, some mobile or special purpose operating systems may not provide a frameworks/middleware 718 layer, while others may provide such a layer. Other software architectures may include additional or different layers.

The operating system 714 may manage hardware resources and provide common services. The operating system 714 may include, for example, a kernel 728, services 730, and drivers 732. The kernel 728 may act as an abstraction layer between the hardware and the other software layers. For example, the kernel 728 may be responsible for memory management, processor management (e.g., scheduling), component management, networking, security settings, and so on. The services 730 may provide other common services for the other software layers. In some examples, the services 730 include an interrupt service. The interrupt service may detect the receipt of an interrupt and, in response, cause the architecture 702 to pause its current processing and execute an interrupt service routine (ISR) when an interrupt is accessed.

The drivers 732 may be responsible for controlling or interfacing with the underlying hardware. For instance, the drivers 732 may include display drivers, camera drivers, Bluetooth^{®} drivers, flash memory drivers, serial communication drivers (e.g., Universal Serial Bus (USB) drivers), Wi-Fi^{®} drivers, NFC drivers, audio drivers, power management drivers, and so forth depending on the hardware configuration.

The libraries 716 may provide a common infrastructure that may be utilized by the applications 720 and/or other components and/or layers. The libraries 716 typically provide functionality that allows other software modules to perform tasks in an easier fashion than to interface directly with the underlying operating system 714 functionality (e.g., kernel 728, services 730 and/or drivers 732). The libraries 716 may include system libraries 734 (e.g., C standard library) that may provide functions such as memory allocation functions, string manipulation functions, mathematic functions, and the like. In addition, the libraries 716 may include API libraries 736 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 716 may also include a wide variety of other libraries 738 to provide many other APIs to the applications 720 and other software components/modules.

The frameworks/middleware 718 may provide a higher-level common infrastructure that may be utilized by the applications 720 and/or other software components/modules. For example, the frameworks/middleware 718 may provide various graphic user interface (GUI) functions, high-level resource management, high-level location services, and so forth. The frameworks/middleware 718 may provide a broad spectrum of other APIs that may be utilized by the applications 720 and/or other software components/modules, some of which may be specific to a particular operating system or platform.

The applications 720 include built-in applications 740 and/or third-party applications 742. Examples of representative built-in applications 740 may include, but are not limited to, a contacts application, a browser application, a book reader application, a location application, a media application, a messaging application, and/or a game application. Third-party applications 742 may include any of the built-in applications as well as a broad assortment of other applications. In a specific example, the third-party application 742 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 742 may invoke the API calls 724 provided by the mobile operating system such as operating system 714 to facilitate functionality described herein.

The applications 720 may utilize built in operating system functions (e.g., kernel 728, services 730 and/or drivers 732), libraries (e.g., system libraries 734, API libraries 736, and other libraries 738), frameworks/middleware 718 to create user interfaces to interact with users of the system. Alternatively, or additionally, in some systems, interactions with a user may occur through a presentation layer, such as presentation layer 744. In these systems, the application/module "logic" can be separated from the aspects of the application/module that interact with a user.

Some software architectures utilize virtual machines. In the example of FIG. 7, this is illustrated by virtual machine 748. A virtual machine creates a software environment where applications/modules can execute as if they were executing on a hardware computing device. A virtual machine is hosted by a host operating system (operating system 714) and typically, although not always, has a virtual machine monitor 746, which manages the operation of the virtual machine as well as the interface with the host operating system (i.e., operating system 714). A software architecture executes within the virtual machine 748 such as an operating system 750, libraries 752, frameworks/middleware 754, applications 756, and/or presentation layer 758. These layers of software architecture executing within the virtual machine 748 can be the same as corresponding layers previously described or may be different.

### MODULES, COMPONENTS AND LOGIC

A computer system may include logic, components, modules, mechanisms, or any suitable combination thereof. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. One or more computer systems (e.g., a standalone, client, or server computer system) or one or more hardware processors may be configured by software (e.g., an application or application portion) as a hardware-implemented module that operates to perform certain operations as described herein.

A hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Hardware-implemented modules may be temporarily configured (e.g., programmed), and each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses that connect the hardware-implemented modules). Multiple hardware-implemented modules are configured or instantiated at different times. Communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. The processor or processors may be located in a single location (e.g., within a home environment, an office environment, or a server farm), or the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

### ELECTRONIC APPARATUS AND SYSTEM

The systems and methods described herein may be implemented using digital electronic circuitry, computer hardware, firmware, software, a computer program product (e.g., a computer program tangibly embodied in an information carrier, e.g., in a machine-readable medium for execution by, or to control the operation of, data processing apparatus, e.g., a programmable processor, a computer, or multiple computers), or any suitable combination thereof.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites (e.g., cloud computing) and interconnected by a communication network. In cloud computing, the server-side functionality may be distributed across multiple computers connected by a network. Load balancers are used to distribute work between the multiple computers. Thus, a cloud computing environment performing a method is a system comprising the multiple processors of the multiple computers tasked with performing the operations of the method.

Operations may be performed by one or more programmable processors executing a computer program to perform functions by operating on input data and generating output. Method operations can also be performed by, and apparatus of systems may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. A programmable computing system may be deployed using hardware architecture, software architecture, or both. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out example hardware (e.g., machine) and software architectures that may be deployed.

### EXAMPLE MACHINE ARCHITECTURE AND MACHINE-READABLE MEDIUM

FIG. 8 is a block diagram of a machine in the example form of a computer system 800 within which instructions 824 may be executed for causing the machine to perform any one or more of the methodologies discussed herein. The machine may operate as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 800 includes a processor 802 (e.g., a central processing unit (CPU), a graphics processing unit (GPU), or both), a main memory 804, and a static memory 806, which communicate with each other via a bus 808. The computer system 800 may further include a video display unit 810 (e.g., a liquid crystal display (LCD) or a cathode ray tube (CRT)). The computer system 800 also includes an alphanumeric input device 812 (e.g., a keyboard or a touch-sensitive display screen), a user interface navigation (or cursor control) device 814 (e.g., a mouse), a storage unit 816, a signal generation device 818 (e.g., a speaker), and a network interface device 820.

### MACHINE-READABLE MEDIUM

The storage unit 816 includes a machine-readable medium 822 on which is stored one or more sets of data structures and instructions 824 (e.g., software) embodying or utilized by any one or more of the methodologies or functions described herein. The instructions 824 may also reside, completely or at least partially, within the main memory 804 and/or within the processor 802 during execution thereof by the computer system 800, with the main memory 804 and the processor 802 also constituting machine-readable media 822.

While the machine-readable medium 822 is shown in FIG. 8 to be a single medium, the term "machine-readable medium" may include a single medium or multiple media (e.g., a centralized or distributed database, and/or associated caches and servers) that store the one or more instructions 824 or data structures. The term "machine-readable medium" shall also be taken to include any tangible medium that is capable of storing, encoding, or carrying instructions 824 for execution by the machine and that cause the machine to perform any one or more of the methodologies of the present disclosure, or that is capable of storing, encoding, or carrying data structures utilized by or associated with such instructions 824. The term "machine-readable medium" shall accordingly be taken to include, but not be limited to, solid-state memories, and optical and magnetic media. Specific examples of machine-readable media 822 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and compact disc read-only memory (CD-ROM) and digital versatile disc read-only memory (DVD-ROM) disks. A machine-readable medium is not a transmission medium.

### TRANSMISSION MEDIUM

The instructions 824 may further be transmitted or received over a communications network 826 using a transmission medium. The instructions 824 may be transmitted using the network interface device 820 and any one of a number of well-known transfer protocols (e.g., hypertext transport protocol (HTTP)). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 824 for execution by the machine, and includes digital or analog communications signals or other intangible media to facilitate communication of such software.

Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. Finally, as used herein, the conjunction "or" refers to a non-exclusive "or," unless specifically stated otherwise.

## Claims

1. A method for sharing a data object between a first system (150) and a second system (140), the first system (150) configured to process a data object that includes an identifier for configuration data for said data object, the second system (140) configured to process a data object with configuration data included in said data object, the method comprising:
accessing a data object of the first system (150), the data object comprising object data and an identifier referring to first configuration data;
based on the identifier, accessing the first configuration data from a database;
creating a modified data object comprising the object data and at least a portion of the first configuration data allowing to use the data object by a second system; and
importing the modified data object into the second system (140); and/or the method comprising:
accessing a second data object of the second system (140), the second data object comprising second object data, second configuration data, and a second identifier;
creating a second modified data object comprising the second object data and the second identifier, the second modified data object excluding at least a portion of the second configuration data; and
importing the modified second data object into the first system (150), the first system using the second identifier for accessing configuration data from a configuration server (120) for using the second data object.

2. The method of claim 1, wherein:
the identifier comprises a timestamp that indicates a time at which the data object was created.

3. The method of claim 1 or 2, wherein the second identifier comprises a timestamp that indicates a time at which the second data object was created.

4. The method of any one of claims 1 to 3, wherein:
the data object further comprises one or more identifiers of portions of configuration data applicable to the data object; and
the modified data object comprises the identified portions of the configuration data and excludes unidentified portions of the configuration data.

5. The method of any one of claims 1 to 4, wherein the identifier comprises a version number; and/or
wherein the accessing of the database comprises accessing the database via a network.

6. A system for sharing a data object between a first system (150) and a second system (140), the first system (150) configured to process a data object that includes an identifier for configuration data for said data object, the second system (140) configured to process a data object with configuration data included in said data object, the system comprising:
a memory that stores instructions; and
one or more processors configured by the instructions to perform operations according to claim 1.

7. The system of claim 6, wherein:
the identifier comprises a timestamp that indicates a time at which the data object was created.

8. The system of claim 6 or 7, wherein the second identifier comprises a timestamp that indicates a time at which the second data object was created.

9. The system of any one of claims 6 to 8, wherein:
the data object further comprises one or more identifiers of portions of configuration data applicable to the data object; and
the modified data object comprises the identified portions of the configuration data and excludes unidentified portions of the configuration data.

10. The system of any one of claims 6 to 9, wherein the identifier comprises a version number; and/or
wherein the accessing of the database comprises accessing the database via a network.

11. A non-transitory computer-readable medium that stores instructions for sharing a data object between a first system (150) and a second system (140), the first system (150) configured to process a data object that includes an identifier for configuration data for said data object, the second system (140) configured to process a data object with configuration data included in said data object, wherein the instructions when executed by one or more processors, cause the one or more processors to perform operations according to claim 1.

12. The non-transitory computer-readable medium of claim 11, wherein:
the identifier comprises a timestamp that indicates a time at which the data object was created.

13. The non-transitory computer-readable medium of claim 11 or 12, wherein the second identifier comprises a timestamp that indicates a time at which the second data object was created.

14. The non-transitory computer-readable medium of any one of claims 11 to 13, wherein:
the data object further comprises one or more identifiers of portions of configuration data applicable to the data object; and
the modified data object comprises the identified portions of the configuration data and excludes unidentified portions of the configuration data.

15. The non-transitory computer-readable medium of any one of claims 11 to 14, wherein the identifier comprises a version number.

## Patentansprüche

1. Verfahren zum gemeinsamen Verwenden eines Datenobjekts zwischen einem ersten System (150) und einem zweiten System (140), wobei das erste System (150) zum Verarbeiten eines Datenobjekts ausgebildet ist, das eine Kennung für Konfigurationsdaten für das Datenobjekt umfasst, wobei das zweite System (140) zum Verarbeiten eines Datenobjekts mit Konfigurationsdaten, die in das Datenobjekt einbezogen sind, ausgebildet ist, wobei das Verfahren umfasst:
Zugreifen auf ein Datenobjekt des ersten Systems (150), wobei das Datenobjekt Objektdaten und eine Kennung umfasst, die sich auf die ersten Konfigurationsdaten bezieht;
auf der Basis der Kennung, Zugreifen auf die ersten Konfigurationsdaten von einer Datenbank;
Erzeugen eines modifizierten Datenobjekts, das die Objektdaten und mindestens einen Teil der ersten Konfigurationsdaten umfasst, welche die Verwendung des Datenobjekts durch ein zweites System zulassen; und
Importieren des modifizierten Datenobjekts in das zweite System (140); und/oder wobei das Verfahren umfasst:
Zugreifen auf ein zweites Datenobjekt des zweiten Systems (140), wobei das zweite Datenobjekt zweite Objektdaten, zweite Konfigurationsdaten und eine zweite Kennung umfasst;
Erzeugen eines zweiten modifizierten Datenobjekts, das die zweiten Objektdaten und die zweite Kennung umfasst, wobei das zweite modifizierte Datenobjekt mindestens einen Teil der zweiten Konfigurationsdaten ausschließt; und
Importieren des modifizierten zweiten Datenobjekts in das erste System (150), wobei das erste System die zweite Kennung zum Zugreifen auf Konfigurationsdaten von einem Konfigurationsserver (120) zur Verwendung des zweiten Datenobjekts nutzt.

2. Verfahren nach Anspruch 1, wobei:
die Kennung einen Zeitstempel umfasst, der eine Zeit angibt, bei der das Datenobjekt erzeugt wurde.

3. Verfahren nach Anspruch 1 oder 2, wobei die zweite Kennung einen Zeitstempel umfasst, der eine Zeit angibt, bei der das zweite Datenobjekt erzeugt wurde.

4. Verfahren nach einem der Ansprüche 1 bis 3, wobei:
das Datenobjekt ferner eine oder mehrere Kennung(en) von Teilen von Konfigurationsdaten umfasst, die auf das Datenobjekt anwendbar sind; und
das modifizierte Datenobjekt die identifizierten Teile der Konfigurationsdaten umfasst und nicht identifizierte Teile der Konfigurationsdaten ausschließt.

5. Verfahren nach einem der Ansprüche 1 bis 4, wobei die Kennung eine Versionsnummer umfasst; und/oder
wobei das Zugreifen auf die Datenbank das Zugreifen auf die Datenbank über ein Netzwerk umfasst.

6. System zum gemeinsamen Verwenden eines Datenobjekts zwischen einem ersten System (150) und einem zweiten System (140), wobei das erste System (150) zum Verarbeiten eines Datenobjekts ausgebildet ist, das eine Kennung für Konfigurationsdaten für das Datenobjekt umfasst, wobei das zweite System (140) zum Verarbeiten eines Datenobjekts mit Konfigurationsdaten ausgebildet ist, die in das Datenobjekt einbezogen sind, wobei das System umfasst:
einen Speicher, der Anweisungen speichert; und
einen oder mehrere Prozessor(en), der oder die ausgebildet ist oder sind, durch die Anweisungen Vorgänge nach Anspruch 1 durchzuführen.

7. System nach Anspruch 6, wobei:
die Kennung einen Zeitstempel umfasst, der eine Zeit angibt, bei der das Datenobjekt erzeugt wurde.

8. System nach Anspruch 6 oder 7, wobei die zweite Kennung einen Zeitstempel umfasst, der eine Zeit angibt, bei der das zweite Datenobjekt erzeugt wurde.

9. System nach einem der Ansprüche 6 bis 8, wobei:
das Datenobjekt ferner eine oder mehrere Kennung(en) von Teilen von Konfigurationsdaten umfasst, die auf das Datenobjekt anwendbar sind; und
das modifizierte Datenobjekt die identifizierten Teile der Konfigurationsdaten umfasst und nicht identifizierte Teile der Konfigurationsdaten ausschließt.

10. System nach einem der Ansprüche 6 bis 9, wobei die Kennung eine Versionsnummer umfasst; und/oder
wobei das Zugreifen auf die Datenbank das Zugreifen auf die Datenbank über ein Netzwerk umfasst.

11. Nicht-flüchtiges computerlesbares Medium, das Anweisungen zum gemeinsamen Verwenden eines Datenobjekts zwischen einem ersten System (150) und einem zweiten System (140) umfasst, wobei das erste System (150) zum Verarbeiten eines Datenobjekts ausgebildet ist, das eine Kennung für Konfigurationsdaten für das Datenobjekt umfasst, wobei das zweite System (140) zum Verarbeiten eines Datenobjekts mit Konfigurationsdaten ausgebildet ist, die in das Datenobjekt einbezogen sind, wobei die Anweisungen, wenn sie durch einen oder mehrere Prozessor(en) ausgeführt werden, bewirken, dass der eine oder die mehreren Prozessor(en) Vorgänge nach Anspruch 1 ausführt oder ausführen.

12. Nicht-flüchtiges computerlesbares Medium nach Anspruch 11, wobei:
die Kennung einen Zeitstempel umfasst, der eine Zeit angibt, bei der das Datenobjekt erzeugt wurde.

13. Nicht-flüchtiges computerlesbares Medium nach Anspruch 11 oder 12, wobei die zweite Kennung einen Zeitstempel umfasst, der eine Zeit angibt, bei der das zweite Datenobjekt erzeugt wurde.

14. Nicht-flüchtiges computerlesbares Medium nach einem der Ansprüche 11 bis 13, wobei:
das Datenobjekt ferner eine oder mehrere Kennung(en) von Teilen von Konfigurationsdaten umfasst, die auf das Datenobjekt anwendbar sind; und
das modifizierte Datenobjekt die identifizierten Teile der Konfigurationsdaten umfasst und nicht identifizierte Teile der Konfigurationsdaten ausschließt.

15. Nicht-flüchtiges computerlesbares Medium nach einem der Ansprüche 11 bis 14, wobei die Kennung eine Versionsnummer umfasst.

## Revendications

1. Procédé de partage d'un objet de données entre un premier système (150) et un second système (140), le premier système (150) étant configuré pour traiter un objet de données qui inclut un identifiant pour des données de configuration pour ledit objet de données, le second système (140) étant configuré pour traiter un objet de données avec des données de configuration incluses dans ledit objet de données, le procédé comprenant :
accéder à un objet de données du premier système (150), l'objet de données comprenant des données d'objet et un identifiant se référant à des premières données de configuration ;
en fonction de l'identifiant, accéder aux premières données de configuration depuis une base de données ;
créer un objet de données modifié comprenant les données d'objet et au moins une portion des premières données de configuration permettant d'utiliser l'objet de données par un second système ; et
importer l'objet de données modifié dans le second système (140) ; et/ou le procédé comprenant :
accéder à un second objet de données du second système (140), le second objet de données comprenant des secondes données d'objet, des secondes données de configuration et un second identifiant ;
créer un second objet de données modifié comprenant les secondes données d'objet et le second identifiant, le second objet de données modifié excluant au moins une portion des secondes données de configuration ; et
importer le second objet de données modifié dans le premier système (150), le premier système utilisant le second identifiant pour accéder à des données de configuration provenant d'un serveur de configuration (120) pour utiliser le second objet de données.

2. Procédé selon la revendication 1, dans lequel :
l'identifiant comprend une estampille temporelle qui indique une heure à laquelle l'objet de données a été créé.

3. Procédé selon la revendication 1 ou 2, dans lequel le second identifiant comprend une estampille temporelle qui indique une heure à laquelle le second objet de données a été créé.

4. Procédé selon l'une quelconque des revendications 1 à 3, dans lequel :
l'objet de données comprend en outre un ou plusieurs identifiants de portions de données de configuration applicables à l'objet de données ; et
l'objet de données modifié comprend les portions identifiées des données de configuration et exclut des portions non identifiées des données de configuration.

5. Procédé selon l'une quelconque des revendications 1 à 4, dans lequel l'identifiant comprend un numéro de version ; et/ou
dans lequel l'accès à la base de données comprend accéder à la base de données par le biais d'un réseau.

6. Système de partage d'un objet de données entre un premier système (150) et un second système (140), le premier système (150) étant configuré pour traiter un objet de données qui inclut un identifiant pour des données de configuration pour ledit objet de données, le second système (140) étant configuré pour traiter un objet de données avec des données de configuration incluses dans ledit objet de données, le système comprenant :
une mémoire qui stocke des instructions ; et
un ou plusieurs processeurs configurés par les instructions pour réaliser des opérations selon la revendication 1.

7. Système selon la revendication 6, dans lequel :
l'identifiant comprend une estampille temporelle qui indique une heure à laquelle l'objet de données a été créé.

8. Système selon la revendication 6 ou 7, dans lequel le second identifiant comprend une estampille temporelle qui indique une heure à laquelle le second objet de données a été créé.

9. Système selon l'une quelconque des revendications 6 à 8, dans lequel :
l'objet de données comprend en outre un ou plusieurs identifiants de portions de données de configuration applicables à l'objet de données ; et
l'objet de données modifié comprend les portions identifiées des données de configuration et exclut des portions non identifiées des données de configuration.

10. Système selon l'une quelconque des revendications 6 à 9, dans lequel l'identifiant comprend un numéro de version ; et/ou
dans lequel l'accès à la base de données comprend accéder à la base de données par le biais d'un réseau.

11. Support non transitoire lisible par ordinateur qui stocke des instructions pour partager un objet de données entre un premier système (150) et un second système (140), le premier système (150) étant configuré pour traiter un objet de données qui inclut un identifiant pour des données de configuration pour ledit objet de données, le second système (140) étant configuré pour traiter un objet de données avec des données de configuration incluses dans ledit objet de données, dans lequel les instructions amènent le ou les processeurs à réaliser des opérations selon la revendication 1 lors de leur exécution par un ou plusieurs processeurs.

12. Support non transitoire lisible par ordinateur selon la revendication 11, dans lequel :
l'identifiant comprend une estampille temporelle qui indique une heure à laquelle l'objet de données a été créé.

13. Support non transitoire lisible par ordinateur selon la revendication 11 ou 12, dans lequel le second identifiant comprend une estampille temporelle qui indique une heure à laquelle le second objet de données a été créé.

14. Support non transitoire lisible par ordinateur selon l'une quelconque des revendications 11 à 13, dans lequel :
l'objet de données comprend en outre un ou plusieurs identifiants de portions de données de configuration applicables à l'objet de données ; et
l'objet de données modifié comprend les portions identifiées des données de configuration et exclut des portions non identifiées des données de configuration.

15. Support non transitoire lisible par ordinateur selon l'une quelconque des revendications 11 à 14, dans lequel l'identifiant comprend un numéro de version.
